# EUROPEAN PATENT SPECIFICATION

(11) **EP 3 222 519 B1**
(45) Date of publication and mention of the grant of the patent: **09.01.2019**
(21) Application number: 16164278.0
(22) Date of filing: 07.04.2016
(51) Int. Cl.: B64C 11/48, B64D 33/10, B64D 35/06, B64D 35/08, B64D 27/02

(54) **AIRPLANE**
FLUGZEUG
AVION

(30) Priority: 25.03.2016 IT UA20162035
(43) Date of publication of application: 27.09.2017
(73) Proprietor: Robby Moto Engineering S.r.l., 26041 Casalmaggiore (CR) (IT)
(72) Inventor: Papetti, Roberto, 26041 Casalmaggiore (CR) (IT); Ciacchi, Piercarlo, 26041 Casalmaggiore (CR) (IT); Calati, Eugenio, 26041 Casalmaggiore (CR) (IT)
(74) Representative: Brunacci, Marco

(56) References cited:
- WO-A1-93/13983
- DE-A1- 4 239 639
- DE-C- 441 601
- FR-A- 474 594
- GB-A- 137 863
- US-A- 2 388 247
- US-A- 3 191 888
- US-A1- 2012 209 456
- US-A1- 2012 329 593
- US-A1- 2014 325 981

## Description

The present invention relates to an airplane, in particular to an airplane for the conduction of scientific research missions at high altitude.

For years the need has been known to be able to fly at "stratospheric" altitudes for the purpose of carrying out various types of missions such as, e.g., reconnaissance flights, observations, samplings, etc.

The need is therefore known to reach the "stratosphere", i.e., the layer of the earth's atmosphere on average at an altitude between 15 km and 55 km, and remain flying within it for a time interval necessary to carry out the above missions.

This need is particularly acute for the study of the climate changes which are transforming the "Earth System".

One of the main objectives of scientists is to collect and develop a collection of complete, accurate and long-term data of the climatic variables such as air temperature and atmospheric pressure, the radiation spectrum, water vapor, trace gases and aerosols, the properties of clouds and precipitation, as well as to acquire other essential climate variables related to the sea (salinity, dissolved CO2, level, etc.) and the Earth's surface (distribution of water, snow and ice in order to evaluate the "coefficient of albedo" of the earth's surface), and other parameters useful for assessing and understanding atmospheric processes and changes in progress.

In this regard, it is essential to apply observation, measurement and sampling methods at high altitude.

Some methods can be applied by orbiting satellites, with the limit that such devices do not guarantee a temporal coverage determinable a priori, i.e., the observations, measurements, or readings must be limited to time intervals dictated by the speed with which the satellites orbit around the earth's surface. Furthermore, satellites cannot make observations or take samples directly in the stratosphere, because they orbit at greater heights.

The need to fly in the stratosphere is therefore a result of the need to have at disposal aerial platforms onto which to install instruments and devices needed to carry out various observations, measurements, surveys, and samplings, in order to collect data useful for studying climate changes, or in order to supplement and/or calibrate the aforementioned satellite techniques.

In particular, the aerial platforms have to fly in the stratosphere at altitudes that reach 18 kilometers (about 55,000 feet) in order to carry out missions that investigate the border area between the upper troposphere and lower stratosphere, very significant for the processes that determine climate changes. A first type of airplane is known used in the past as aerial platforms operating at the altitudes mentioned above.

Falling within this category is the aerial platform "M55 Geophysica", developed by the Russian Air Force and now owned by the European scientific community, and other NASA-owned airplane, such as the "WB57" plane or the "RPAV Global Hawk" plane.

These airplanes have turbojet engines whereby they aspire air to be supplied as combustive agent for the internal combustion process.

A drawback of this type of airplane is linked to the fact that in the stratosphere air pressure is much less than the air pressure in the layers closer to the earth's surface.

To a lower pressure of the air flowing into the turbojet, in fact, corresponds lower propulsion power.

Another drawback of known airplane is linked to the fact that they are very expensive both as regards the duration of the flight in the stratosphere, and as regards maintenance.

It is for this reason that planes such as the M55 Geophysica and the like have never been produced on an industrial scale, but have remained in the prototype stage or have been produced in limited numbers, similarly to the use that has been made of them.

A second type of airplane provides, alternatively to the turbojet engine (susceptible to loss of power due to the loss of air pressure), propeller propulsion systems.

The drawback of this second type of airplane is that at the state of the art it has never reached altitudes above 14,300 m and has never exceeded a flight range of 5-10 hours.

Special types of airplanes and/or engines for vehicles are disclosed in the patent documents WO 93/13983, US 3,191,888, FR 474594, DE 4239639, US 2012/329593, US 2014/325981, US 2,388,247 and DE 441601. In particular, US2012/329593 describes alternative hybrid transmission systems for vehicles including aircraft, as well as, propulsion systems and vehicles comprising such transmission systems, to improve various propulsion systems using a combination of at least two power sources with the option for simultaneous or alternating power input from two or more power sources, while providing desired characteristics or components. Such characteristics or components can include, but are not limited to: power, torque, acceleration, cruising speed or power, fuel efficiency, battery charging, endurance, power sizing, weight, capacity, efficiency, speed, mechanically and/or electrically added system requirements, design, fuel selection, functional design, structural design, lift to drag ratio, weight, and/or other desired characteristic or component.

The main aim of the present invention is to provide an airplane which allows performing flights in the troposphere and in the stratosphere.

One object of the present invention is to provide an airplane which allows flying in the stratosphere in an affordable, reliable and durable manner.

Another object of the present invention is to provide an airplane the production and maintenance of which are simple and economic.

Another object of the present invention is to provide an airplane which allows to overcome the mentioned drawbacks of the prior art within the ambit of a simple, rational, easy, effective to use as well as affordable solution.

The above mentioned objects are achieved by the present airplane having the characteristics of claim 1.

Other characteristics and advantages of the present invention will become better evident from the description of a preferred, but not exclusive, embodiment of an airplane, illustrated by way of an indicative, but non-limiting, example in the accompanying drawings, wherein:
Figure 1 is an axonometric view of the airplane according to the invention;
Figures 2 and 3 are schematic views of details of the airplane according to the invention.

With particular reference to such figures, globally indicated by 1 is an airplane, in particular an airplane for conducting scientific research missions at high altitude.

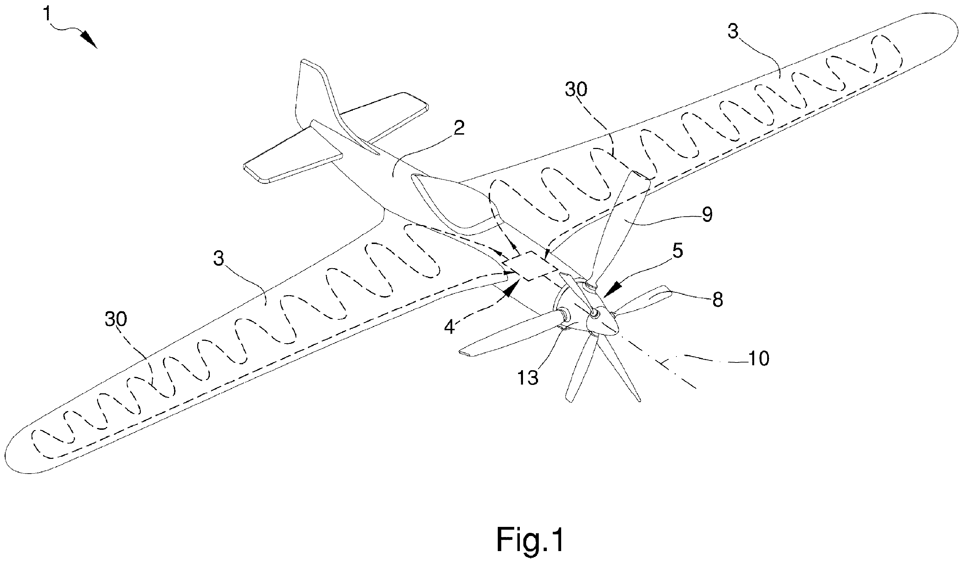

The airplane 1, as shown in figure 1, comprises at least a fuselage 2 and at least a pair of wings 3 associated with the fuselage to form an aircraft body 2, 3 associated with an engine assembly 4 suitable for providing mechanical energy for takeoff and maintaining the aircraft body 2, 3 in flight.

According to the invention, the engine assembly 4 is associated with a propulsion system 5 having at least a propeller 8, 9 suitable for converting the mechanical energy into propulsion thrust.

Furthermore, still according to the invention, the engine assembly 4 comprises a first piston engine 6 associated with the propulsion system 5 and configured for take-off and maintaining the aircraft body 2, 3 in flight at low altitude.

In particular, the first engine 6 is configured so as to allow both the takeoff of the airplane 1, and its maintaining in flight up to a height of around 9,144 m (30,000 feet).

In the present embodiment, the first engine 6 is a traditional piston engine powered, e.g., by gasoline, but the use of traditional piston engines of different type cannot be ruled out.

The engine assembly 4 comprises a second piston engine 7 associated with the propulsion system 5 and configured to maintain the aircraft body 2,3 in flight at high altitude.

In particular, the second engine 7 is configured to maintain the airplane 1 in flight at altitudes higher than about 7,620 m (25,000 feet), and up to altitudes of about 16,764 m (55,000 feet).

In the range of altitudes between 7,620 and 9,144 m (25,000 and 30,000 feet), both engines 6, 7 can be operated alternately or together to maintain the airplane 1 in flight.

In the present treatise, the term "low altitude" means all heights below 9,144 m (30,000 feet), while "high altitude" means all heights above 7,620 m (25,000 feet).

The heights between 7,620 and 9,144 m (25,000 and 30,000 feet) can be considered both "low-altitude" and "high-altitude" for the purposes of the present patent document.

In the present embodiment, the propulsion system 5 comprises a first propeller 8 and a second propeller 9 arranged in series along a same axis of rotation 10 and operated respectively by the first engine 6 and by the second engine 7.

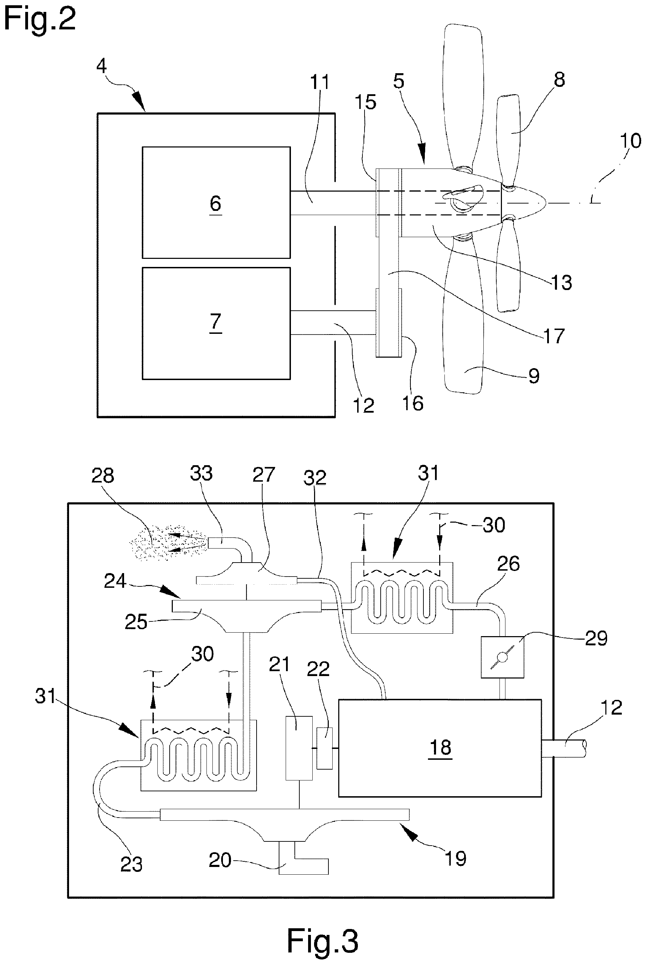

As schematically shown in figure 2, the first engine 6 and the second engine 7 are associated with a first engine shaft 11 and a second engine shaft 12 respectively.

The first engine shaft 11 is suitable for rotating around the axis of rotation 10, while the second shaft 12 is suitable for rotating around an axis parallel to the axis of rotation 10.

The first propeller 8 is keyed directly to the first engine shaft 11, and is dragged in motion by the latter.

The second propeller 9 is keyed to a hub 13 mounted on the first engine shaft 11 and is suitable for rotating with respect to this.

The hub 13 is associated with a dragging unit 14 suitable for kinematically connecting the hub to the second engine shaft 12.

In particular, the dragging unit 14 has a first pulley 15, associated with the hub 13 and suitable for dragging it in rotary motion, and a second pulley 16, associated with the second shaft 12 and suitable for being dragged in rotary motion by the latter.

The two pulleys 15, 16 are kinematically connected together by means of a flexible belt element 17 suitable for transmitting the rotation motion from the second shaft 12 to the hub 13.

This way, the two propellers 8, 9 can be operated independently the one from the other.

Still with reference to the present embodiment, the second propeller 9 is arranged along the axis of rotation 10 in front position with respect to the first propeller 8 and with reference to the position of the airplane 1.

The second propeller 9, moreover, has blades having larger dimensions than the blades of the first propeller 8.

Such solution allows the second propeller 9 to provide enough propulsion thrust to maintain in flight an airplane 1, even at high altitudes, where the air is thin. In the present embodiment the propellers 8, 9 are arranged at the front portion of the airplane 1 and are both equipped with three blades arranged at 120 degrees the one with respect to the other.

Different solutions cannot however be ruled out wherein the number of blades is different, or the propellers 8, 9 are arranged in different positions.

With reference to figure 3, in the present embodiment, the second engine 7 comprises at least an engine body 18 wherein the pistons are sliding for the rotational operation of the second engine shaft 12 associated with the second propeller 9 for dragging the latter in motion.

Advantageously, the second engine 7 comprises at least a centrifugal compressor 19 kinetically associated with the second engine shaft 12 and suitable for compressing the incoming air flow intended to be conveyed to the engine body 18.

In particular, the centrifugal compressor 19 is associated with an inlet duct 20 suitable for receiving air from the outside to convey it into the compressor itself. The centrifugal compressor 19 is associated with the second engine shaft 12 for the recovery of part of the mechanical energy produced by the latter to be used to compress the incoming air.

More particularly, the centrifugal compressor 19 is associated with the second engine shaft 12 by interposition of a gear transmission box device 21 connected to the engine shaft by means of a clutch 22.

This way, the centrifugal compressor 19 is put in a position to operate at a number of revolutions greater than the rotation revolutions of the second engine shaft 12.

The air flowing into the centrifugal compressor 19 comes out compressed, i.e., it passes from an inlet pressure, e.g., 100 hPa, to an outlet pressure greater than the inlet pressure, e.g., 180 hPa.

Such compression therefore allows making a first mechanical supercharging stage of the second engine 7.

The air coming out of the centrifugal compressor 19 is conveyed, by means of a first circulation duct 23, towards a turbocharger assembly 24.

In fact, the second engine 7, usefully comprises at least a turbocharger assembly 24 interposed between the centrifugal compressor 19 and the engine body 18 and associated with these.

The turbocharger assembly 24 is suitable for further increasing the pressure of the compressed air to be conveyed into the engine body 18, e.g., by increasing the pressure from 180 hPa to 360 hPa.

This way, therefore, a second mechanical supercharging stage of the second engine 7 can be made.

As schematically shown in Figure 3, the turbocharger assembly 24 comprises a compression portion 25 suitable for receiving compressed air from the centrifugal compressor 19.

The compression portion 25 is of the type of a compressor device connected at inlet to the first circulation duct 23 for receiving the air coming from the centrifugal compressor 19, and connected at outlet to a second circulation duct 26 suitable for conveying the further-compressed air towards the engine body 18.

The turbocharger assembly 24, then, comprises an expansion portion 27, suitable for receiving exhaust gases 28 in expansion from the engine body 18.

In particular, the exhaust gases 28 flow from the combustion chamber of the engine body 18 to the expansion portion 27 by means of a gas duct 32, and from the expansion portion 27 to the atmosphere by means of an outlet duct 33.

The expansion portion 27 is associated with the compression portion 25 so as to provide the latter with the mechanical energy needed to increase the air pressure.

The exhaust fumes generated by the combustion processes of the engine body, in fact, are made to expand in the turbine, or in another mechanical device, so as to recover mechanical energy to be exploited to further compress the inflowing compressed air.

Advantageously, the second engine 7 comprises two turbocharger assemblies arranged in series for the increase in pressure of air.

For simplicity, Figure 3 shows only one turbocharger assembly 24.

The other turbocharger assembly is completely identical to that shown and is suitable for raising the pressure of the compressed air, e.g., from 360 mBar to 450 mBar, realizing a third mechanical supercharge stage.

Still with reference to Figure 3, the second circulation duct 26 terminates in an adjustment member 29, e.g., a butterfly valve, suitable for adjusting the flow of compressed air to be conveyed to the engine body 18.

Conveniently, the airplane 1 comprises a compressed-air cooling system 30, 31 having a cooling line 30 passing through at least the second engine 7 in which a heat transfer fluid circulates suitable for absorbing heat at least from the compressed air.

It cannot be ruled out in fact that the same heat transfer fluid be made to circulate near other parts of the engine assembly 4 to cool these down. Advantageously, the cooling line 30 extends along the surface of the wings to cool the heat transfer fluid.

This way the large wing surface can be exploited to favor the cooling of the heat transfer fluid.

The cooling system 30, 31, furthermore, comprises at least a heat exchange device 31 wherein the cooling line and the circulation duct in which the air flows are brought nearer to one another to favor the heat exchange between the heat transfer fluid and the air itself.

The latter, in fact, following compression by the centrifugal compressor 19 or the turbocharger assembly 24, acquires heat, as it warms up, and needs to be cooled before being introduced into the engine body.

In particular, with reference to Figure 3, the cooling system 30, 31 comprises a first heat exchange device 31 and a second heat exchange device 31 arranged respectively downstream of the centrifugal compressor 19 and downstream of the turbocharger assembly 24 in the direction of air circulation.

Not shown, similarly to that described above, is a third heat exchange device located downstream of the second turbocharger assembly.

Advantageously, the heat transfer fluid is of the oil type, which allows operating at very low pressures without the risk of evaporation.

Other types of heat transfer fluids cannot be ruled out as long as these are able to operate at the pressure conditions which exist in the stratosphere. Advantageously, the second engine 7 is fuelled with a fuel mixture comprising at least chemical compounds comprising oxygen.

This way, it is possible to cope with the thin air, and therefore with the difficulty of finding combusting agent due to low pressures and lack of oxygen, in order to maintain the combustion process inside the engine.

During combustion, in fact, part of the oxygen contained in the fuel mixture is freed and used to fuel the process, producing chemical supercharging. Preferably, the fuel mixture comprises compounds of the type of methanol or butanol or nitromethane, but different compounds cannot be ruled out containing one or more oxygen atoms in their molecular structure. Advantageously, the fuel mixture comprises at least an oxygenated base mixture and at least an oxygenating additive.

This particular solution provides for the use of an already-oxygenated base mixture to which are added further oxygenating substances used as additive. For example, the fuel mixture can be made using ethanol and n-butanol as oxygenated base mixture, and using nitromethane as oxygenating additive. Alternative solutions cannot however be ruled out wherein the oxygenated base mixture and the oxygenating additive are of different type with respect to those mentioned above.

Conveniently, therefore, the second engine 7 has a compression ratio of between 15 and 20.

This value permits favorably exploiting both the low-pressure climatic conditions found at high altitudes, and the properties of the fuel mixture used, thereby increasing the efficiency of the engine itself.

This way it is possible to cope with the demand for more power resulting from the conditions described above.

The operation of the present invention is as follows.

The first engine 6 is operated and, thanks to the propulsive thrust of the first propeller 8, the airplane 1 takes off and is maintained in flight up to an altitude of about 7,620 - 9,144 m (25,000 - 30,000 feet).

To reach higher altitudes, the second engine 7 is operated with the set in motion of the second propeller 9.

The second engine 7 is configured to fly at high altitudes, i.e., it permits exploiting the oxygenating capacity of the fuel mixture and the high compression ratio to cope with the environmental difficulties of the stratosphere.

The second engine 7, in particular, draws air from the inlet duct 20 and compresses it into three stages.

A first stage occurs in the centrifugal compressor 19, a second and a third stage in the turbochargers assemblies 24 arranged in series.

The compressed air, passing from one stage to another, is cooled in the devices 31 exchanging heat with the heat transfer fluid.

The air, compressed and cooled, is conveyed to the engine body 18, in particular into the combustion chamber, to give rise to the combustion processes needed to provide mechanical energy to the propulsion system 5.

The heated heat transfer fluid, on the other hand, flows along the cooling line 30 in the surface of the wings 3 where, by lapping the external air, it can transfer heat and cool down before being re-introduced into the engine assembly 4 to cool the compressed air or, if necessary, other parts of the engine.

It has in practice been found how the described invention achieves the intended objects and in particular the fact is underlined that the airplane allows to fly both in the troposphere and in the stratosphere.

The use of the two engines so configured, in fact, allows the airplane to fly easily at very different altitudes thereby permitting, for example, search missions, surveys, sampling and other tests both at troposphere and stratosphere level.

The airplane, furthermore, also allows flying in the stratosphere, inexpensively. reliably and for a long time thanks to the fact that it combines simple features specially adapted for high altitude flight.

Because of these same features, the airplane is easy and simple, as well as inexpensive to produce.

Finally, the provided airplane represents an aerial platform which can be fully integrated with satellite constellations for the supplementing and validation of the data provided by the latter.

## Claims

1. Airplane (1) comprising at least a fuselage (2) and at least a pair of wings (3) associated with said fuselage (2) to form an aircraft body (2, 3) associated with an engine assembly (4) suitable for providing mechanical energy for takeoff and maintaining said aircraft body (2, 3) in flight, said engine assembly (4) being associated with a propulsion system (5) having at least a propeller (8, 9) suitable for converting said mechanical energy into propulsion thrust, said engine assembly (4) comprising:
- at least a first piston engine (6) associated with said propulsion system (5) and configured for take-off and maintaining said aircraft body (2, 3) in flight at low altitude below 9,144 m (30,000 feet);
- at least a second piston engine (7) associated with said propulsion system (5) and configured to maintain said aircraft body (2,3) in flight at high altitude above 7,620 m (25,000 feet);
wherein said second engine (7) comprises:
- at least an engine body (18), pistons, and an engine shaft (12), wherein said pistons are sliding in said engine body (18) for the rotational operation of said engine shaft (12) which is associated with said propeller (9) for dragging the latter in motion;
- at least a centrifugal compressor (19) kinetically associated with said engine shaft (12) and suitable for compressing the incoming air flow intended to be conveyed to said engine body (18); and
- at least a turbocharger assembly (24) interposed between said centrifugal compressor (19) and said engine body (18), associated with these and suitable for increasing the pressure of said compressed air to be conveyed into said engine body (18).

2. Airplane (1) according to claim 1, **characterized in that** said turbocharger assembly (24) comprises:
- a compression portion (25), suitable for receiving said compressed air from said centrifugal compressor (19);
- an expansion portion (27), suitable for receiving exhaust gases (28) in expansion from said engine body (18) and associated with said compression portion (25) to provide mechanical energy for the increase in pressure of said compressed air.

3. Airplane (1) according to one or more of the preceding claims, **characterized in that** it comprises at least two of said turbocharger assemblies (24) arranged in series for the increase in pressure of said air.

4. Airplane (1) according to one or more of the preceding claims, **characterized in that** it comprises a cooling system (30, 31) of said compressed air having:
- a cooling line (30) passing through at least said second engine (7) and wherein a heat transfer fluid circulates suitable for absorbing heat from at least said compressed air;
- at least a heat exchange device (31) wherein said cooling line (30) and said air are brought nearer to one another to favor the heat exchange.

5. Airplane (1) according to claim 4, **characterized in that** said cooling line (30) extends along at least a portion of the surface of said wings (3) to cool said heat transfer fluid.

6. Airplane (1) according to claim 4 or 5, **characterized in that** said heat transfer fluid is of the oil type.

7. Airplane (1) according to one or more of the preceding claims, **characterized in that** said second engine (7) is fuelled with a fuel mixture comprising at least chemical compounds comprising oxygen.

8. Airplane (1) according to claim7, **characterized in that** said fuel mixture comprises at least an oxygenated base mixture and at least an oxygenating additive.

9. Airplane (1) according to one or more of the preceding claims, **characterized in that** said second engine (7) has a compression ratio of between 15 and 18.

10. Airplane (1) according to one or more of the preceding claims, **characterized in that** said propulsion system (5) comprises a first propeller (8) and a second propeller (9) arranged in series along a same axis of rotation (10) and operated by said first engine (6) and by said second engine (7), respectively.

## Patentansprüche

1. Flugzeug (1), umfassend mindestens einen Rumpf (2) und mindestens ein Paar Tragflächen (3), die mit dem Rumpf (2) verbunden sind, um einen Flugzeugkörper (2, 3) zu bilden, der mit einer Motoranordnung (4) verbunden ist, die zum Bereitstellen mechanischer Energie zum Starten und Halten des Flugzeugkörpers (2, 3) im Flug geeignet ist, wobei die Motoranordnung (4) mit einem Antriebssystem (5) verbunden ist, das mindestens einen Propeller (8, 9) aufweist, der zum Umwandeln der mechanischen Energie in Vortriebsschub geeignet ist, wobei die Motoranordnung (4) umfasst:
- mindestens einen ersten Kolbenmotor (6), der mit dem Antriebssystem (5) verbunden ist und zum Starten und Halten des Flugzeugkörpers (2, 3) im Flug in geringer Höhe unterhalb von 9.144 m (30.000 Fuß) ausgelegt ist;
- mindestens einen zweiten Kolbenmotor (7), der mit dem Antriebssystem (5) verbunden ist und dafür ausgelegt ist, den Flugzeugkörper (2, 3) im Flug in großer Höhe oberhalb von 7.620 m (25.000 Fuß) zu halten; wobei der zweite Motor (7) umfasst:
- mindestens einen Motorkörper (18), Kolben und eine Motorwelle (12), wobei die Kolben zum Drehbetrieb der Motorwelle (12), die mit dem Propeller (9) verbunden ist, in dem Motorkörper (18) gleiten, um Letzteren in Bewegung zu versetzen;
- mindestens einen Zentrifugalkompressor (19), der mit der Motorwelle (12) kinetisch verbunden ist und zum Verdichten des einströmenden Luftstroms, der in den Motorkörper (18) geleitet werden soll, geeignet ist; und
- mindestens eine Turboladeranordnung (24), die zwischen dem Zentrifugalkompressor (19) und dem Motorkörper (18) angeordnet ist, mit diesen verbunden ist und zum Erhöhen des Drucks der Druckluft, die in den Motorkörper (18) eingeleitet werden soll, geeignet ist.

2. Flugzeug (1) nach Anspruch 1, **dadurch gekennzeichnet, dass** die Turboladeranordnung (24) umfasst:
- einen Kompressionsteil (25), der zum Empfangen der Druckluft von dem Zentrifugalkompressor (19) geeignet ist;
- einen Expansionsteil (27), der zum Empfangen von sich ausdehnenden Abgasen (28) von dem Motorkörper (18) geeignet ist und mit dem Kompressionsteil (25) verbunden ist, um mechanische Energie für die Druckerhöhung der Druckluft bereitzustellen.

3. Flugzeug (1) nach einem oder mehreren der vorhergehenden Ansprüche, **dadurch gekennzeichnet, dass** es mindestens zwei der Turboladeranordnungen (24) umfasst, die für die Druckerhöhung der Luft in Reihe geschaltet sind.

4. Flugzeug (1) nach einem oder mehreren der vorhergehenden Ansprüche, **dadurch gekennzeichnet, dass** es ein Kühlsystem (30, 31) der Druckluft umfasst, das aufweist:
- eine Kühlleitung (30), die mindestens durch den zweiten Motor (7) hindurch verläuft und in der ein Wärmeübertragungsfluid zirkuliert, das zur Absorption von Wärme aus der Druckluft geeignet ist;
- mindestens eine Wärmeaustauschvorrichtung (31), in der die Kühlleitung (30) und die Luft näher aneinander gebracht werden, um den Wärmeaustausch zu begünstigen.

5. Flugzeug (1) nach Anspruch 4, **dadurch gekennzeichnet, dass** sich die Kühlleitung (30) mindestens entlang eines Teils der Oberfläche der Tragflächen (3) erstreckt, um das Wärmeübertragungsfluid zu kühlen.

6. Flugzeug (1) nach Anspruch 4 oder 5, **dadurch gekennzeichnet, dass** das Wärmeübertragungsfluid vom Öltyp ist.

7. Flugzeug (1) nach einem oder mehreren der vorhergehenden Ansprüche, **dadurch gekennzeichnet, dass** der zweite Motor (7) mit einem Treibstoffgemisch betrieben wird, das mindestens Sauerstoff umfassende chemische Verbindungen umfasst.

8. Flugzeug (1) nach Anspruch 7, **dadurch gekennzeichnet, dass** das Treibstoffgemisch mindestens ein sauerstoffangereichertes Basisgemisch und mindestens einen Zusatzstoff zur Sauerstoffanreicherung umfasst.

9. Flugzeug (1) nach einem oder mehreren der vorhergehenden Ansprüche, **dadurch gekennzeichnet, dass** der zweite Motor (7) einen Verdichtungsgrad aufweist, der zwischen 15 und 18 liegt.

10. Flugzeug (1) nach einem oder mehreren der vorhergehenden Ansprüche, **dadurch gekennzeichnet, dass** das Antriebssystem (5) einen ersten Propeller (8) und einen zweiten Propeller (9) umfasst, die entlang einer gemeinsamen Drehachse (10) in Reihe geschaltet sind und jeweils durch den ersten Motor (6) und durch den zweiten Motor (7) angetrieben werden.

## Revendications

1. Avion (1) comprenant au moins un fuselage (2) et au moins une paire d'ailes (3) associées audit fuselage (2) pour former un corps d'aéronef (2, 3) associé à un assemblage de moteurs (4) pouvant fournir une énergie mécanique pour un décollage et maintenir ledit corps d'aéronef (2, 3) en vol, ledit assemblage de moteurs (4) étant associé à un système de propulsion (5) possédant au moins une hélice (8, 9) pouvant convertir ladite énergie mécanique en force de propulsion, ledit assemblage de moteurs (4) comprenant
- au moins un premier moteur à piston (6) associé audit système de propulsion (5) et configuré pour décoller et maintenir ledit corps d'aéronef (2, 3) en vol à une altitude basse en-dessous de 9,144 m (30,000 pieds) ;
- au moins un deuxième moteur à piston (7) associé audit système de propulsion (5) et configuré pour maintenir ledit corps d'aéronef (2, 3) en vol à une altitude élevée au-dessus de 7,620 m (25,000 pieds) ;
dans lequel ledit deuxième moteur (7) comprend :
- au moins un corps de moteur (18), des pistons, et un arbre de moteur (12), dans lequel lesdits pistons coulissent dans ledit corps de moteur (18) pour l'opération en rotation dudit arbre de moteur (12) qui est associé à ladite hélice (9) pour mettre cette dernière en mouvement ;
- au moins un compresseur centrifuge (19) associé de manière cinétique audit arbre de moteur (12) et pouvant compresser le flux d'air entrant destiné à être introduit dans ledit corps de moteur (18) ; et
- au moins un assemblage de turbocompresseur (24) interposé entre ledit compresseur centrifuge (19) et ledit corps de moteur (18), associé à ceux-ci et pouvant augmenter la pression dudit air compressé à introduire dans ledit corps de moteur (18).

2. Avion (1) selon la revendication 1, **caractérisé en ce que** l'assemblage turbocompresseur (24) comprend :
- une partie de compression (25), pouvant recevoir ledit air compressé depuis ledit compresseur centrifuge (19) ;
- une partie d'expansion (27), pouvant recevoir des gaz d'échappement (28) en expansion depuis ledit corps de moteur (18) et associée à ladite partie de compression (25) pour fournir une énergie mécanique pour augmenter la pression dudit air compressé.

3. Avion (1) selon l'une ou plusieurs des revendications précédentes, **caractérisé en ce qu'**il comprend au moins deux desdits assemblages turbocompresseurs (24) installés en série pour augmenter la pression dudit air.

4. Avion (1) selon l'une ou plusieurs des revendications précédentes, **caractérisé en ce qu'**il comprend un système de refroidissement (30, 31) dudit air compressé possédant :
- une ligne de refroidissement (30) passant à travers au moins ledit deuxième moteur (7) et dans lequel un fluide caloporteur circule pouvant absorber de la chaleur depuis au moins ledit air compressé ;
- au moins un dispositif d'échange thermique (31) dans lequel ladite ligne de refroidissement (30) et ledit air sont amenés l'un vers l'autre pour favoriser l'échange thermique.

5. Avion (1) selon la revendication 4, **caractérisé en ce que** ladite ligne de refroidissement (30) s'étend le long d'au moins une partie de la surface desdites ailes (3) pour refroidir ledit fluide caloporteur.

6. Avion (1) selon la revendication 4 ou 5, **caractérisé en ce que** ledit fluide caloporteur est du type huile.

7. Avion (1) selon l'une ou plusieurs des revendications précédentes, **caractérisé en ce que** ledit deuxième moteur (7) est alimenté par un mélange de carburants comprenant au moins un composé chimique comprenant de l'oxygène.

8. Avion (1) selon la revendication 7, **caractérisé en ce que** ledit mélange de carburant comprend au moins un mélange à base oxygénée et au moins un additif oxygénant.

9. Avion (1) selon l'une ou plusieurs des revendications précédentes, **caractérisé en ce que** ledit deuxième moteur (7) possède un taux de compression compris entre 15 et 18.

10. Avion (1) selon l'une ou plusieurs des revendications précédentes, **caractérisé en ce que** ledit système de propulsion (5) comprend une première hélice (8) et une deuxième hélice (9) installées en série le long d'un même axe de rotation (10) et actionnées respectivement par ledit premier moteur (6) et par ledit deuxième moteur (7).
